# EUROPEAN PATENT SPECIFICATION

(11) **EP 1 209 863 B1**
(45) Date of publication and mention of the grant of the patent: **28.09.2005**
(21) Application number: 01308726.7
(22) Date of filing: 12.10.2001
(51) Int. Cl.: H04L 12/56, H04Q 7/38

(54) **Country detection in a wireless communication device**
Landdetektion in einem drahtlosen Kommunikationsendgerät
Détection du pays dans un dispositif de communication sans fil

(30) Priority: 21.11.2000 JP 2000355076
(43) Date of publication of application: 29.05.2002
(73) Proprietor: Alpine Electronics, Inc., Tokyo (JP)
(72) Inventor: Motomura, Shinichi, c/o Alpine Electronics Inc., Iwaki-city, Fukushima 970-1192 (JP)
(74) Representative: Kensett, John Hinton

(56) References cited:
- EP-A- 1 037 482
- US-A- 5 528 248
- US-A- 6 148 197
- "Specification of the Bluetooth System, Specification Volume 1, Wireless Connections made easy, Core, V1.0 B, Chapter 10 Channel Control and Chapter 11 Hop Selection" SPECIFICATION OF THE BLUETOOTH SYSTEM, XX, XX, vol. 1, 1 December 1999 (1999-12-01), pages 1,95-142, XP002222549

## Description

The present invention relates to electronic apparatuses with wireless communication devices for performing wireless data transmission/reception with various other electronic apparatuses. More particularly, the present invention relates to an electronic apparatus with a wireless communication device capable of automatically changing the frequency of each of various other portable electronic apparatuses with Bluetooth wireless communication devices when a frequency band which is limited for each country changes.

Recently, more and more cellular phones, mobile apparatuses such as notebook personal computers (PCs), hand-held PCs, and personal digital assistants (PDAs), digital still cameras, micro acoustic apparatuses such as MP3 recorders/players, and portable electronic apparatuses such as digital video cameras have been used. Accordingly, there has been an increasing number of occasions for carrying various electronic apparatuses which can perform data transmission/reception with many other electronic apparatuses.

Concerning the use of these electronic apparatuses, for example, a cellular phone is connected to a notebook PC or a PDA, and various data is obtained using the Internet or email. Also, data captured by a digital still camera can be transferred to and stored in a notebook PC. Furthermore, a cellular phone can be connected to the notebook PC, and the currently-captured images and stored images can be transmitted. Similarly, moving images or still images captured by a digital video camera can be transferred to a notebook PC, and the data can be stored, organized, or processed. The data can be transmitted to a remote place using a cellular phone. Concerning the use of an apparatus such as an MP3 apparatus for recording and playing music data, music data is downloaded from the Internet to a notebook PC using a cellular phone. Many pieces of music data are stored in the notebook PC. From among these pieces of music data, a desired piece can be transferred to a memory in the MP3 apparatus, thereby enabling a user to listen to that piece of music.

Concerning the use of various portable electronic apparatuses, these electronic apparatuses must be interconnected in order to perform data transmission/reception. Hitherto, for connections among these electronic apparatuses, the electronic apparatuses are provided with various types of terminals such IEEE 1394 terminals, USB (Universal Serial Bus) terminals, or RS-232C terminals. Cables which correspond to these terminals are connected to the electronic apparatuses, and hence data transmission/reception is performed. In such circumstances, the pre-provided terminals of the electronic apparatuses may differ from one another. In such a case, connections cannot be established unless conversion adapters are used. Because of the cable connections, the movable range between the electronic apparatuses is significantly limited. The wiring may also limit other activities. It is also necessary to prepare various types of cables.

In contrast, for example, IrDA (Infrared Data Association) which employs infrared rays is used to provide technologies for data communication among electronic apparatuses. Since IrDA uses infrared rays, communication is blocked by an obstacle in the link between the electronic apparatuses. A notebook PC or PDA in a bag cannot perform data communication with a digital still camera capturing images. Thus, the usability of IrDA is limited. Another wireless communication technology includes a wireless LAN, which is, however, limited in usability since the wireless LAN cannot provide satisfactory connectivity for small electronic apparatuses such as a microphone or a cellular phone.

Another method for implementing data transfer without using cables includes a method which utilizes a card having a built-in memory chip. Data is written to or read from the card by an electronic apparatus. The recorded data is used by a second electronic apparatus by removing the card, inserting the card into a slot of the second electronic apparatus, and obtaining the data. According to this method, real-time data transfer cannot be performed since it is necessary to store data in a card and then read the data from the card. Thus, the usability of the method is limited. In particular, various types of micro memory chips are used, including multimedia card (Siemens/SanDisk), Memory Stick (trademark of Sony), Smartmedia (trademark of Toshiba), and the like. It is thus difficult to exchange data among many electronic apparatuses. Moreover, the data capacity of a single recording medium is limited.

In view of the foregoing circumstance, data transmission/reception using Bluetooth (named after the king of Denmark who unified the nation) has come to the public attention. Bluetooth is a technology designed to implement wireless communication for data transmission/reception among electronic apparatuses using a predetermined radio frequency band, thus allowing the electronic apparatuses to be uniformly used. Various Bluetooth-enabled electronic apparatuses are on the market. Bluetooth is a communication protocol for short-range, digital information communication using a spread spectrum communication technology. Bluetooth-enabled transceivers operate in the 2.4 GHz Industrial-Scientific-Medical (ISM) band which can be freely used without permission. Bluetooth is a two-way wireless interface technology employing this frequency band. The current maximum transfer rate is 723 kbps or greater; the audio rate is 64 kbps, which is fast; and the transmission range is approximately 10 m. Since transmission/reception is performed using radio waves, data transfer is implemented despite the presence of various obstacles by detouring. A Bluetooth-enabled data processor for transmission/reception can be formed in a single chip, which is small and inexpensive.

It has been proposed that Bluetooth-enabled communication devices be installed in various electronic apparatuses. It is expected that Bluetooth-enabled devices will be widely used and rapidly become popular. For example, an in-vehicle electronic apparatus such as a navigation apparatus can communicate with a cellular phone using Bluetooth. The navigation apparatus obtains navigation-related data or other data from the Internet or displays image data attached to a received email on a monitor television thereof. The Bluetooth technology can be used in various ways. Another in-vehicle electronic apparatus includes an audio apparatus which can receive and record external music data without establishing a cable connection with a cellular phone. The recorded music data can be played or utilized. The navigation apparatus and the audio apparatus can be easily operated by inputting speech to a wireless microphone. Also, signals received by a GPS (global positioning system) receiver can be transmitted wirelessly to the navigation apparatus.

When Bluetooth becomes widely used in various fields, Bluetooth-enabled apparatuses such as digital still cameras and PDAs which are configured to perform data transmission/reception using Bluetooth may be carried abroad. The use of cellular phones commonly around the world has also been discussed. In such a case, a system containing a Bluetooth-enabled cellular phone and various electronic apparatuses may be taken abroad along with a user. In particular, people of member states of the European Union (EU) can freely travel around the EU countries, and hence these people often use Bluetooth-enabled cellular phones outside their countries. When a vehicle provided with Bluetooth-enabled in-vehicle electronic apparatuses crosses a border into a different country, the Bluetooth-enabled electronic apparatuses also cross the border.

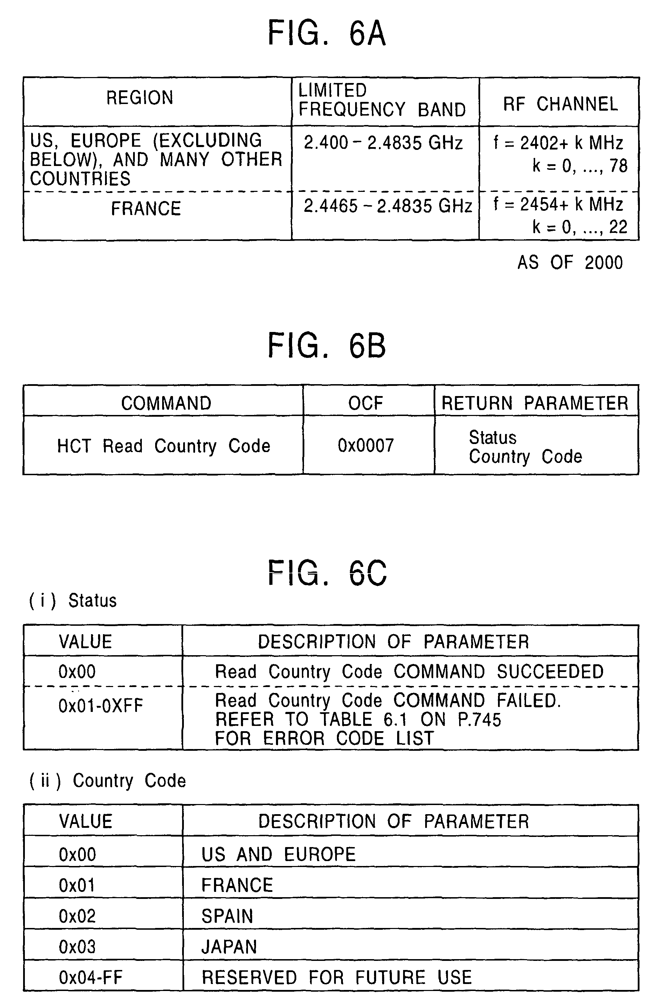

Bluetooth operates in the 2.4 GHz ISM band without any permission since the ISM band can be freely used. Referring to Fig. 6A, an investigation as of 2000 shows that usable frequencies and a frequency band vary from country to country. Specifically, in the U.S. and many European countries, a frequency band of 83.5 MHz in a frequency range of 2400 MHz to 2483.5 MHz is used. In this frequency band, 79 radio frequency (RF) channels in total are defined every 1 MHz from 2402 MHz. In France, however, a frequency band of 36 MHz is used in a frequency range of 2446.5 MHz to 2483.5 MHz. In this frequency band, 23 RF channels in total are defined every 1 MHz from 2454 MHz.

As described above, it is expected that Bluetooth-enabled electronic apparatuses will be widely used around the world. In contrast, it is difficult to immediately change the conventional radio-wave allocation due to various circumstances such as military communication of many countries including those not shown in Fig. 6A. It is impossible to standardize the radio-wave allocation around the world at the same time. Standardization is expected to be gradually achieved. Depending on how widely Bluetooth is used, it is unlikely that operating frequency bands and operating RF channel frequencies will accurately coincide with one another for some time.

When a user with a Bluetooth-enabled electronic apparatus travels abroad, the user is required to change the operating radio-wave of the Bluetooth-enabled electronic apparatus if a country which the user enters has a radio-wave allocation control differing from the previous country. To this end, the electronic apparatus must be provided in advance with an operating frequency adjuster. Using the operating frequency adjuster, the user adjusts the frequency to that of the country entered. The user is required to refer to a frequency allocation table which differs according to each country and to perform adjustment. This is burdensome work for the user. In order to relieve this burden, a table showing countries' operating frequency bands is installed in advance in the electronic apparatus. The table is displayed on a display or the like, and the user looks at the table and makes a selection. Even in this case, the user must perform a burdensome task of setting selection every time the user crosses a border.

Concerning wireless data communication among various electronic apparatuses, Japan is considering making the 5.2 GHz band or the 5.3 GHz band open to public use in the future. As communication technologies progress and utilization of radio waves changes in the future, there is a trend toward partial liberation from utilization limitation. This is not only the case with Japan, but also with other countries. In the course of liberation of operating radio frequency bands, at first each country liberates its own band, which is followed by international standardization in accordance with radio-wave utilization. Problems similar to the foregoing problem with Bluetooth, which is caused by differences among different countries in using the 2.4 GHz band, are very likely to occur in a wide variety of frequency bands.

EP-A-1037482 shows a roaming mobile radio device according to the preamble of claim 1. US-A-6,148,197 shows a system in which the contents of a memory are rewritten based on data transmitted to an operating frequency changing unit.

It is an object of the present invention to provide an electronic apparatus with a wireless communication device which implements wireless data communication using Bluetooth with various other electronic apparatuses, whereby it becomes unnecessary to adjust the operating frequency every time the electronic apparatus crosses a border although different countries have different usable frequency bands.

According to the present invention, there is provided an electronic apparatus with a wireless communication device, comprising: a wireless communication device comprising: a GPS signal input unit for inputting a GPS signal; a current country detecting unit for detecting a current country in which the electronic apparatus is presently located based on the GPS signal; a usable frequency band retrieval unit for retrieving a usable frequency band of the current country based on country name data from the current country detecting unit and data on a table of country names and operating frequency bands; and an operating frequency changing unit for changing the frequency for inter-electronic-apparatus communication based on the retrieval result obtained by the usable frequency band retrieval unit characterised in that: the operating frequency changing unit transmits data on the usable frequency band of the current country through a communication unit to an operating frequency changing unit of another electronic apparatus with a wireless communication device wherein the operating frequency changing unit outputs an instruction to change the frequency to the usable frequency band of the current country through a communication unit to an operating frequency changing unit of another electronic apparatus with a wireless communication device, the other electronic apparatus being registered in a system component registering unit, and wherein when it is determined that the frequency of radio waves output by the other electronic apparatus does not correspond to the usable frequency band of the current country, the operating frequency changing unit outputs an instruction to change the frequency to the usable frequency band of the current country through the communication unit to the other electronic apparatus with the wireless communication device, the other electronic apparatus being registered in the system component registering unit.

The current country detecting unit may determine whether the electronic apparatus crosses a border. When it is determined that the electronic apparatus crosses a border, the current country detecting unit may detect the country entered using the GPS signal.

The other electronic apparatus may include a memory for storing an operating frequency. The contents of the memory may be rewritten based on the data transmitted to the operating frequency changing unit.

The frequency band used by the wireless communication device may conform to Bluetooth which uses the 2.4 GHz band.

The usable frequency band may be detected when the electronic apparatus is turned ON or is being used.

The table of country names and operating frequency bands may be externally rewritable through a communication unit.

Arranged as described above, according to the present invention, an electronic apparatus with a wireless communication device for performing wireless data communication using Bluetooth with various other electronic apparatuses is provided. Thus, it becomes unnecessary to perform burdensome work, that is, adjusting the operating frequency every time the electronic apparatus crosses a border although different countries use different usable radio frequency bands. It is thus possible to automatically change the frequency to an appropriate frequency.

According to the present invention, since an operating frequency changing unit may transmit data on a usable frequency band of a current country through a communication unit to an operating frequency changing unit of another electronic apparatus with an electronic device, the frequency of the other electronic apparatus can be automatically changed to an appropriate frequency without providing the other electronic apparatus with special means for detecting that the other electronic apparatus crosses a border. Even if many electronic apparatuses are connected to one another by wireless communication means, the present invention can be implemented by only providing one of the electronic apparatuses with means for detecting that the electronic apparatus crosses a border, thus simplifying the system.

According to the present invention, the other wireless communication device may contain a memory for storing an operating frequency, and the contents of the memory may be rewritable based on the data transmitted to the operating frequency changing unit. If the electronic apparatus crosses a border, thus requiring the operating frequency band to be changed, the operating frequency can be changed by externally rewriting the memory. Thus, it is possible to easily and reliably change the operating frequency.

According to the present invention, the frequency band used by the wireless communication device may conform to Bluetooth which uses the 2.4 GHz band. When performing wireless communication with other electronic apparatuses using Bluetooth which is to be uniformly used around the world, the electronic apparatus can automatically adjust the operating frequency even when the electronic apparatus enters a country in which the frequency band which is to be standardized in the future is not used. Thus, the usability of the Bluetooth apparatus is improved.

According to the present invention, the electronic apparatus with the wireless communication device may be one of a PDA, a hand-held PC, a notebook PC, and a navigation apparatus, all of which contain map display software. The map display software can be used to form means for detecting that the electronic apparatus crosses a border. In particular, since most of navigation apparatuses contain a GPS receiver and map data recording means, the present invention can be implemented without adding a special, expensive device.

According to the present invention, the usable frequency band may be retrieved when the electronic apparatus is turned ON or is being used. When the electronic apparatus is started to be used, it is possible to check whether the previously-used frequency becomes unusable because the electronic apparatus has entered a different country. In this way, the electronic apparatus can use the correct frequency. When the electronic apparatus which is being used enters a different country, the frequency is automatically changed without performing a special operation.

According to the present invention, a table of country names and operating frequency bands can be externally rewritten through the communication unit. The most recent external information is input through the communication unit in order to change the operating frequency band of each country, which is expected to change from year to year. Accordingly, the table of country names and operating frequency bands can be rewritten. It is thus possible to appropriately change the frequency based on the most recent data.

An embodiment of the present invention will now be described, by way of example, with reference to the accompanying diagrammatic drawings, in which:
Fig. 1 is a block diagram of a GPS-receiving Bluetooth-enabled electronic apparatus and a Bluetooth-enabled general electronic apparatus for communicating with the former electronic apparatus;
Fig. 2 schematically illustrates the configuration of a system containing a cellular phone, a PDA, and a digital still camera which are linked with one another using Bluetooth;
Fig. 3 is a flowchart showing an operating frequency changing process performed by the GPS-receiving Bluetooth-enabled electronic apparatus in this embodiment;
Fig. 4 is a flowchart showing a process of changing the operating frequency of a Bluetooth-linked, registered apparatus;
Fig. 5 is a flowchart showing a process of setting the frequency of the Bluetooth-linked, registered apparatus;
Figs. 6A to 6C are tables showing actual Bluetooth data, which include the following: Fig. 6A is a table showing the Bluetooth limited frequency bands and RF channels; Fig. 6B is a table showing a Read Country Code command and return parameters thereof; and Fig. 6C includes tables showing the return parameters; and
Fig. 7 is a block diagram of a communication system forming an in-vehicle communication system using Bluetooth according to the present invention.

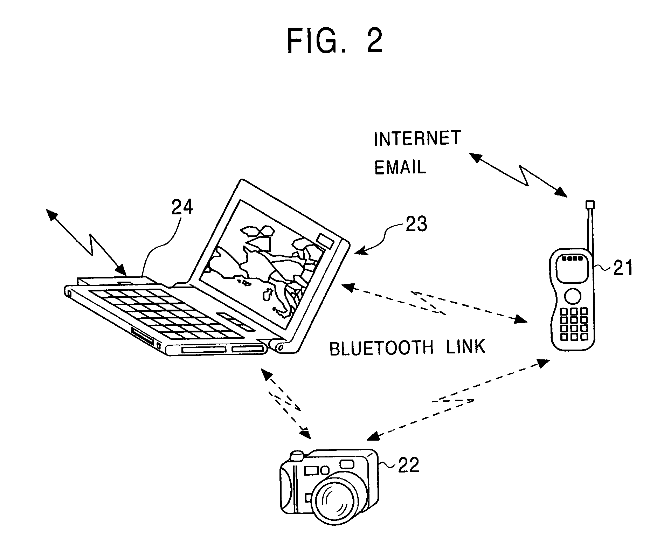

The present invention will become apparent from the following description of the preferred embodiments with reference to the accompanying drawings. Fig. 2 shows an example of the use of Bluetooth-enabled electronic apparatuses according to the present invention. In this example, a cellular phone 21, a digital camera 22, and a PDA, a hand-held PC, or a notebook PC (hereinafter referred to as a "PDA") 23 are used. Each of the apparatuses 21 to 23 is provided with a Bluetooth-enabled communication device which operates in the 2.4 GHz ISM band. Arranged as described above, an image captured by the digital camera 22 is transmitted to the cellular phone 21 using Bluetooth, and the cellular phone 21 in turn transfers the image to a predetermined destination using email. The image data can also be transmitted to the PDA 23 using Bluetooth, and hence many pieces of image data can be stored in the PDA 23. File management and data manipulation can be performed. If necessary, data in the PDA 23 is transmitted to the cellular phone 21, and the cellular phone 21 transmits the data to a remote place using email. Internet information received by the cellular phone 21 is transmitted to the PDA 23 using Bluetooth, thus displaying the information.

Among these Bluetooth-enabled electronic apparatuses, the PDA 23 stores map data in advance. As shown in Fig. 2, since the PDA 23 is provided with a GPS receiver 24, the PDA 23 can receive GPS signals. Using the GPS-reception signals and the map data, the current location can be detected. The map data can be utilized by storing in advance commercial map display software data. Alternatively, it is only necessary to store data on borders in order to retrieve Bluetooth operating frequencies as in the present invention described hereinafter. The GPS receiver 24 can be directly connected to the PDA 23. If the GPS receiver 24 is a type which can only be connected using cable, the GPS receiver 24 can be connected to the PDA 23 by cable. If the GPS receiver 24 has a built-in Bluetooth data communication device, the built-in unit is used instead.

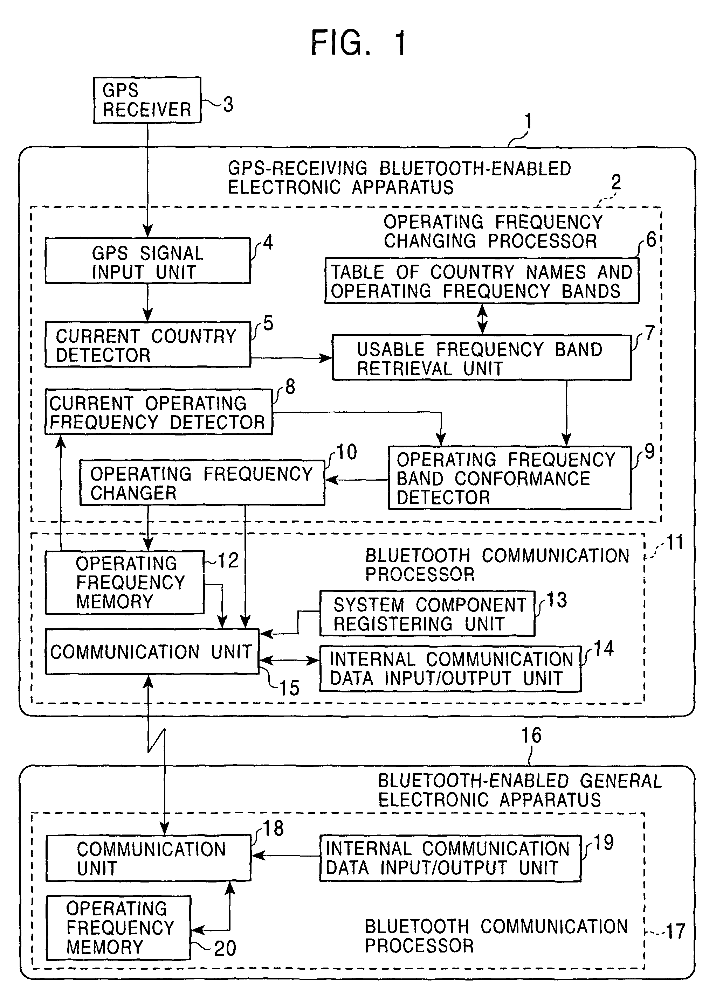

In a system containing various electronic apparatuses which are linked with one another by Bluetooth for wireless data transfer, as in the PDA 23 shown in Fig. 2, a GPS receiver is connected to an electronic apparatus so that the electronic apparatus can detect a country at the current location. Referring to Fig. 1, this electronic apparatus is shown as a GPS-receiving Bluetooth-enabled electronic apparatus 1. Various types of apparatuses such as the PDA 23 or an in-vehicle navigation apparatus can be used as the GPS-receiving Bluetooth-enabled electronic apparatus 1 as long as they can process signals from the GPS receiver and map data.

In Fig. 1, a Bluetooth-enabled electronic apparatus which has no GPS receiver connected thereto is shown as a Bluetooth-enabled general electronic apparatus 16. Although a case in which the cellular phone 21 or the digital camera 22 is used as the Bluetooth-enabled general electronic apparatus 16 has been shown in Fig. 2, various electronic apparatuses such as an audio apparatus can be used using a similar system.

In the example shown in Fig. 1, an operating frequency changing processor 2 is provided in the GPS-receiving Bluetooth-enabled electronic apparatus 1. A GPS receiver 3 which is connected to the Bluetooth-enabled GPS receiving electronic apparatus 1 inputs a current location signal using GPS to a built-in GPS signal input unit 4. Although an example has been described in which the GPS receiver 3 is connected to the GPS-receiving Bluetooth-enabled electronic apparatus 1, alternatively the GPS-receiving Bluetooth-enabled electronic apparatus 1 can contain a built-in GPS receiver and an external antenna connected thereto.

A current country detector 5 detects the country at the current location based on the current location signal from the GPS signal input unit 4 and map data stored in a map data storage unit (not shown). Based on data in a table of country names and operating frequency bands 6, a usable frequency band retrieval unit 7 retrieves the detected country and the Bluetooth frequency band used in that country. The detected frequency band is output to an operating frequency band conformance detector 9. As the table of country names and operating frequency bands 6, a table which is partially shown in Fig. 6A is used. For actual use, a table which shows in principle almost all countries around the world and their limited frequency bands is created and used. Since the limited frequency bands may be updated from year to year, it is preferable to establish a connection with a cellular phone, download new data from a Bluetooth-related homepage at predetermined time intervals, and update the table.

When retrieving the usable frequency band, the usable frequency band retrieval unit 7 outputs a "Read Country Code" command as shown in Fig. 6B and reads a country code which is assigned based on differences in the predetermined Bluetooth operating frequency bands. Specifically, as shown in Fig. 6B, the Bluetooth specification defines that every time this command is output, responses, namely, return parameters "Status", which indicates whether reading succeeded or failed, and "Country Code", which indicates the code corresponding to the country when reading succeeded, are output.

As shown in Fig. 6C (i), "Status" is output as a value which indicates whether the command succeeded or failed. If the command failed, a value corresponding to a predetermined error list table is also output. As shown in Fig. 6C (ii), if the command succeeded, "Country Code" is output by reading a value for the corresponding country code. For future use, "0x04" is reserved when Bluetooth will be used by many people around the world since frequency bands will not be unified in different countries for the time being.

Concerning the operating frequency band conformance detector 9, a current operating frequency detector 8 reads a current operating frequency used in Bluetooth communication, which is recorded in an operating frequency memory 12 in a Bluetooth communication processor 11 (described below), and outputs the detected current operating frequency to the operating frequency band conformance detector 9. The operating frequency band conformance detector 9 compares data on the usable frequency band of the current country, which is supplied from the usable frequency band retrieval unit 7, with the data supplied from the current operating frequency detector 8, thus determining whether the two pieces of data match each other, that is, whether the current operating frequency band is appropriate.

If it is determined that the two pieces of data do not match each other, the data on the usable frequency band is output to an operating frequency changer 10. The operating frequency changer 10 outputs the data to a communication unit 15 in the Bluetooth communication processor 11. The Bluetooth communication processor 11 contains a system component registering unit 13. The system component registering unit 13 is used with the master apparatus, that is, the GPS-receiving Bluetooth-enabled electronic apparatus 1, and registers an electronic apparatus which is a slave apparatus forming a system for performing Bluetooth data communication.

In response to an instruction to change the operating frequency from the operating frequency changer 10, the communication unit 15 outputs an instruction instructing electronic apparatuses which are registered in the system component registering unit 13 to change the frequency. In the system for performing Bluetooth data communication, it is checked whether an electronic apparatus is turned ON since communication cannot be performed unless the electronic apparatus is turned ON. If the electronic apparatus is turned ON, the frequency changing instruction is actually given to the electronic apparatus.

The Bluetooth communication processor 11 also contains the operating frequency memory 12. Frequencies used in Bluetooth are stored in the operating frequency memory 12. In response to the operating frequency changing instruction from the operating frequency changer 10, the contents of the memory are rewritten. In response to a very brief communication signal which instructs the electronic apparatus to change the frequency, the electronic apparatus uses the previous operating frequency since the electronic apparatus operates at the previous frequency. In order to do so, the operating frequency memory 12 contains therein a memory for each electronic apparatus registered in the system component registering unit 13. The old frequency is changed to a new frequency only for the electronic apparatus which has already been instructed to change the frequency, and communication is performed with the electronic apparatus at the new frequency.

The Bluetooth communication processor 11 also contains an internal communication data input/output unit 14. If regular external communication data is generated in the electronic apparatus, the external communication data is input to the internal communication data input/output unit 14, which in turn outputs the data to the communication unit 15. The communication unit 15 transmits the data to a predetermined electronic apparatus. If data is input from an external electronic apparatus through the communication unit 15, the data is output to a predetermined function unit in the electronic apparatus through the internal communication data input/output unit 14.

The Bluetooth-enabled general electronic apparatus 16 which communicates with the GPS-receiving Bluetooth-enabled electronic apparatus 1 contains a Bluetooth communication processor 17 which has substantially the same structure as that of the Bluetooth communication processor 11. Similarly, the Bluetooth communication processor 17 contains therein a communication unit 18, an internal communication data input/output unit 19, and an operating frequency memory 20. The communication unit 18 exchanges internal communication data through the internal communication data input/output unit 19 at a frequency recorded in the operating frequency memory 20. In response to a frequency changing instruction signal from the GPS-receiving Bluetooth-enabled electronic apparatus 1 through the communication unit 18, the contents of the operating frequency memory 20 are changed to the frequency instructed.

The frequency is changed when the Bluetooth-enabled general electronic apparatus 16 which is turned ON receives an instruction signal to change the operating frequency. Alternatively, it is possible to set the Bluetooth-enabled general electronic apparatus 16 in the following manner. In a normal state, the Bluetooth-enabled general electronic apparatus 16 which is turned OFF is in communication standby mode. In response to a power-ON signal from the master electronic apparatus, i.e., the GPS-receiving Bluetooth-enabled electronic apparatus 1 which has the GPS receiver 3, the Bluetooth-enabled general electronic apparatus 16 temporarily starts operating. The Bluetooth-enabled general electronic apparatus 16 changes the operating frequency and subsequently is turned OFF.

If an electronic apparatus which performs Bluetooth communication enters a country which uses a different usable frequency band, the electronic apparatus can automatically communicate in the frequency band of that country. However, in the event of a failure to automatically change the frequency band, the electronic apparatus can be provided with an external selector switch or a function button which can be selected, thus allowing the frequency band of the electronic apparatus to be manually changed if necessary.

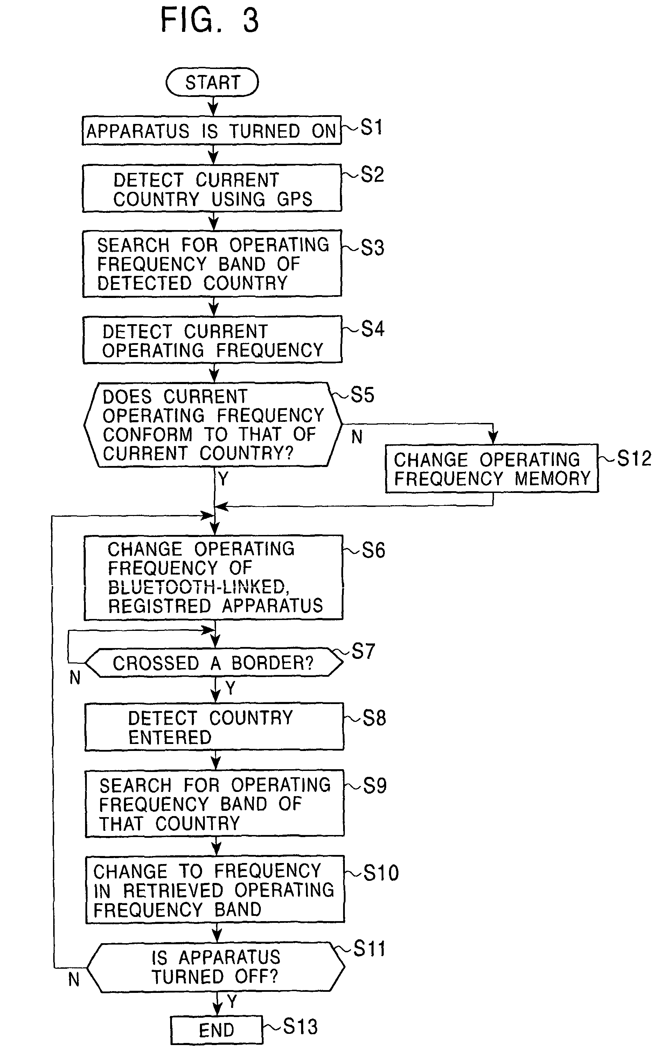

The electronic apparatus containing the above-described functional blocks operates in an operation flow as shown in Figs. 3 to 5. Specifically, Fig. 3 shows a process performed by the GPS-receiving Bluetooth-enabled electronic apparatus 1 shown in Fig. 1, such as the PDA 24 shown in Fig. 2. If the electronic apparatus is turned ON (step S1), the process detects the current country in which the electronic apparatus is presently located using a GPS-reception signal (step S2). The process searches for the operating frequency band of the detected country (step S3). The retrieval process is performed by the usable frequency band retrieval unit 7.

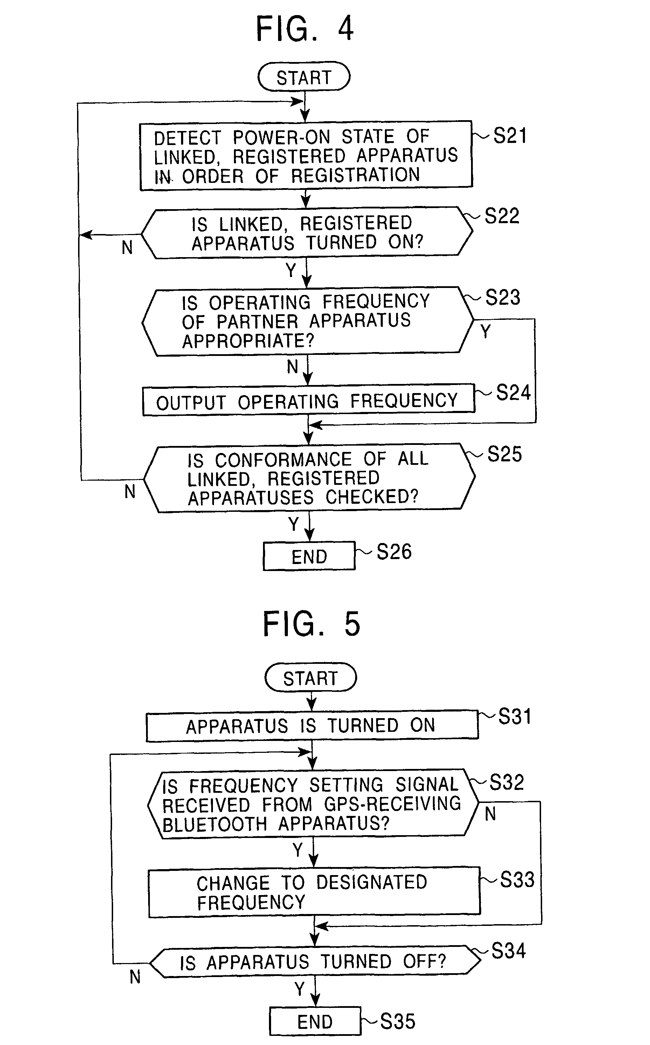

The process detects the current operating frequency (step S4) and determines whether the current operating frequency conforms to the operating frequency band of the current country (step S5). The determination is performed by the operating frequency band conformance detector 9 shown in Fig. 1. If the determination is negative, the operating frequency memory is changed (step S12). If the determination is affirmative, no particular processing is performed, and the process changes the operating frequency of a Bluetooth-linked, registered apparatus (step S6). Specifically, the process checks whether the operating frequency of another Bluetooth-linked general electronic apparatus is appropriate. When the operating frequency is inappropriate, the process changes the operating frequency to the appropriate frequency. The detailed process is described in Fig. 4 hereinafter.

After performing a predetermined operation for the electronic apparatus which is turned ON, the electronic apparatus remains in the normal operating state. In the normal operating state, the process determines whether the electronic apparatus which is being used crosses a border using a GPS signal at appropriate time intervals (step S7). If it is determined that the electronic apparatus has not yet crossed a border, the process is periodically repeated until the electronic apparatus crosses a border. If it is determined that the electronic apparatus has crossed a border, the process detects the country entered using the GPS signal (step S8). The process searches for the operating frequency band of the detected country as in step S3 (step S9) and outputs an instruction to the operating frequency memory 12 (Fig. 1) to change the frequency to the retrieved operating frequency band (step S10). The process determines whether the electronic apparatus is turned OFF (step S11). If the electronic apparatus is not turned OFF, the process returns to step S6 and changes the operating frequency of the Bluetooth-linked, registered electronic apparatus, as shown in Fig. 4, and similar processing is repeated. If it is determined in step S11 that the electronic apparatus is turned OFF, the operation flow is terminated (step S13).

Fig. 4 shows a process of changing the operating frequency of the Bluetooth-linked, registered electronic apparatus. The process detects the power-ON state of each of linked, registered electronic apparatuses in order of registration (step S21). Based on the detection result in step S21, the process determines whether the linked, registered electronic apparatus is turned ON (step S22). If the electronic apparatus is not turned ON, the process returns to step S21 and detects the power-ON state of the subsequently-registered linked electronic apparatus.

In order to perform detection, the GPS-receiving Bluetooth-enabled electronic apparatus 1 outputs a predetermined signal for checking the power-ON state. The process can detect that the electronic apparatus is turned ON when the electronic apparatus receives the predetermined signal and transmits a predetermined response signal. If it is determined in step S22 that the electronic apparatus is turned ON, the process checks whether the operating frequency conforms to the operating frequency band of the current country (step S23). The determination can be performed by detecting the frequency of radio waves output by a partner electronic apparatus in order to determine whether the electronic apparatus is turned ON.

If it is determined that the partner electronic apparatus outputs a frequency that does not correspond to the current country, the process outputs the retrieved frequency which is supposed to be used (step S24). If it is determined that the output frequency is appropriate, no particular processing is performed. After the process outputs the frequency which is supposed to be used, the process determines whether the conformance of all the linked, registered electronic apparatuses has been checked (step S25). If the determination is negative, the process returns to step S21, and similar processing is repeated from detection of the power-ON state of the subsequent linked, registered electronic apparatus. If it is determined in step S25 that the conformance of all the linked, registered electronic apparatuses is checked, the process is terminated (step S26). Subsequently, the operation proceeds to step S7 in Fig. 3, and it is determined whether the electronic apparatus crosses a border.

Fig. 5 shows a process of changing the frequency of the Bluetooth-enabled general electronic apparatus 16 by the GPS-receiving Bluetooth-enabled electronic apparatus 1. Specifically, the frequency of the Bluetooth-linked, registered electronic apparatus is set in the following manner. After the electronic apparatus is turned ON (step S31), the process determines whether a frequency changing signal is received from the GPS-receiving Bluetooth-enabled electronic apparatus 1, which is output in step S24 in Fig. 4 (step S32).

If it is determined that no signal is received, the process proceeds to step S34 and determines whether the electronic apparatus is turned OFF. If the electronic apparatus is not turned OFF, the process returns to step S32 and maintains the current state until the signal is received. If the process receives in step S32 the frequency changing signal because the current operating frequency is inappropriate, the process changes the frequency to the designated frequency (step S33). The frequency is changed by rewriting the operating frequency memory 20 shown in Fig. 1. Subsequently, the process determines whether the electronic apparatus is turned OFF (step S34). If the electronic apparatus is not turned OFF, the process returns to step S32, and similar processing is repeated. If it is determined in step S34 that the electronic apparatus is turned OFF, the process is terminated (step S35).

Bluetooth data communication requires no connection cables. In many cases, data transmission/reception can be implemented despite the presence of various obstacles between electronic apparatuses by detouring. It is thus expected that Bluetooth will be widely used in the future. In particular, an in-vehicle electronic apparatus which is provided with a Bluetooth system can establish wireless links with many other electronic apparatuses. Even when electronic apparatuses are installed in a narrow space in a vehicle, data transmission/reception can be reliably performed with one another. The application of the Bluetooth system to an in-vehicle system has been considered. In such a case, a driver can freely and safely operate many electronic apparatuses using a wireless microphone. The use of the Bluetooth-system for in-vehicle electronic apparatuses has attracted interest.

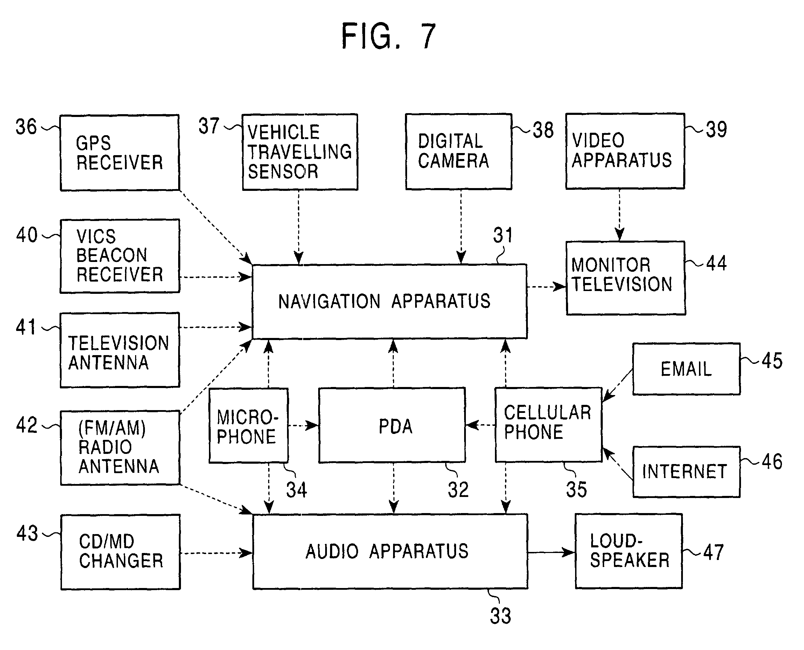

Referring to Fig. 7, many electronic apparatuses are configured to be Bluetooth-enabled, thereby allowing them to freely communicate data with one another. In particular, a navigation apparatus has recently been installed in vehicles. In such vehicles, a GPS receiver which is used in the present invention is installed, and a CD-ROM or a DVD-ROM which has recorded therein detailed map data is used. It is thus possible to detect the current country where the vehicle is presently located. By using a navigation apparatus as a GPS-receiving Bluetooth-enabled electronic apparatus, the present invention can be implemented without greatly modifying conventional Bluetooth electronic apparatuses.

In the example shown in Fig. 7, a GPS receiver 36 is connected to a navigation apparatus 31. In this embodiment, a GPS signal is transmitted/received using Bluetooth. The navigation apparatus 31 receives signals from a vehicle travelling sensor 37, information from a VICS (vehicle information communication system) beacon receiver 40, signals from a television antenna 41, and traffic information from an FM/AM radio antenna 42 using, for example, FM multiplex broadcasting. A digital camera 38, a microphone 34, a PDA 32, a cellular phone 35, and a monitor television 44 are connected to the navigation apparatus 31. A video apparatus 39 is connected to the monitor television 44. Since the implementation of data transmission/reception at approximately 10 Mbps has been considered in future Bluetooth, transmission/reception of video images as described above can be performed.

The PDA 32, the microphone 34, the cellular phone 35, the radio antenna 42, and a CD/MD changer 43 are connected to an audio apparatus 33. The cellular phone 35 is connected to the Internet 46 through a telephone line and sends/receives email 45. Received data can be utilized as various information by the navigation apparatus 31 and can be displayed on the monitor television 44. Various data can be downloaded to the PDA 32. MP3 data can be transmitted to the audio apparatus 33. In particular, the microphone 34 is used to input user's speech, which is used as an operation instructing signal for the navigation apparatus 31. Also, the microphone 34 can be used to input an operation instructing signal for the audio apparatus 33. Also, the microphone 34 can be used to instruct the PDA 32 to output various data.

Since Bluetooth can be used in various manners by in-vehicle electronic apparatuses, it is expected that Bluetooth will be widely used in the future. The necessity of manually changing the frequency bands of many electronic apparatuses may arise whenever the vehicle crosses a border. The present invention removes this necessity. Thus, the present invention can be simply applied by providing each electronic apparatus with means for changing a frequency memory by external communication.

In this embodiment, a case in which an electronic apparatus with a GPS receiver, the electronic apparatus functioning as a master electronic apparatus in a Bluetooth communication system, controls the operating frequency band has been described. When a notebook PC and a small PDA, both of which include GPS receiving functions and map data, are used, each apparatus can automatically control its own operating frequency band. If a GPS receiver is miniaturized in the future, thus allowing country border data or the like to be recorded in a chip, many Bluetooth electronic apparatuses can contain therein the GPS receiver and the chip. In such a case, each electronic apparatus can control its own operating frequency band.

In this embodiment, a case in which the Bluetooth system is used as means of wireless data communication among electronic apparatuses has been described. As described above, it has been considered making the 5.2 GHz band or the 5.3 GHz band open to public use in the future. The range of freely usable radio waves is expanding since radio resources are being made open to the public. In the meantime, the operating frequency bands of countries will be gradually standardized over an extended time period. A similar problem occurs when the above-described electronic apparatuses cross a border and are used. In such a case, automatic frequency changing means using GPS according to the present invention is utilized, thus allowing a user to use the electronic apparatuses without being concerned about differences in the operating frequency bands of different countries.

## Claims

1. An electronic apparatus (1) with a wireless communication device, comprising:
a wireless communication device comprising:
a GPS signal input unit (4) for inputting a GPS signal;
a current country detecting unit (5) for detecting a current country in which the electronic apparatus (1) is presently located based on the GPS signal;
a usable frequency band retrieval unit (7) for retrieving a usable frequency band of the current country based on country name data from the current country detecting unit (5) and data on a table of country names and operating frequency bands (6); and
an operating frequency changing unit (10) for changing the frequency for inter-electronic-apparatus communication based on the retrieval result obtained by the usable frequency band retrieval unit (7)
**characterised in that**: the operating frequency changing unit (10) transmits data on the usable frequency band of the current country through a communication unit (15) to an operating frequency changing unit of another electronic apparatus (16) with a wireless communication device wherein the operating frequency changing unit (10) outputs an instruction to change the frequency to the usable frequency band of the current country through a communication unit (15) to an operating frequency changing unit of another electronic apparatus (16) with a wireless communication device, the other electronic apparatus (16) being registered in a system component registering unit (13), and wherein when it is determined that the frequency of radio waves output by the other electronic apparatus (16) does not correspond to the usable frequency band of the current country, the operating frequency changing unit (10) outputs an instruction to change the frequency to the usable frequency band of the current country through the communication unit (15) to the other electronic apparatus (16) with the wireless communication device, the other electronic apparatus (16) being registered in the system component registering unit (13).

2. An electronic apparatus (1) as claimed in claim 1 wherein, wherein the electronic apparatus (1) with the wireless communication device comprises one of a personal digital assistant, a hand-held personal computer, a notebook personal computer, and a navigation apparatus, all of which contain map display software.

3. An electronic apparatus (1) with a wireless communication device according to Claim 1, wherein:
the current country detecting unit (5) determines whether the electronic apparatus (1) crosses a border; and
when it is determined that the electronic apparatus (1) crosses a border, the current country detecting unit (5) detects the country entered using the GPS signal.

4. An electronic apparatus (1) with a wireless communication device according to Claim 1, wherein:
the other electronic apparatus (16) comprises a memory (20) for storing an operating frequency; and
the contents of the memory (20) are rewritten based on the data transmitted to the operating frequency changing unit.

5. An electronic apparatus (1) with a wireless communication device (11) according to Claim 1, wherein the frequency band used by the wireless communication device (11) conforms to Bluetooth which uses the 2.4 GHz band.

6. An electronic apparatus (1) with a wireless communication device (11) according to Claim 1, wherein the usable frequency band is detected when the electronic apparatus (1) is turned ON or is being used.

7. An electronic apparatus (1) with a wireless communication device (11) according to Claim 1, wherein the table of country names and operating frequency bands (6) is externally rewritable through a communication unit (15).

## Patentansprüche

1. Ein elektronisches Gerät (1) mit einer drahtlosen Kommunikationsvorrichtung, aufweisend:
eine drahtlose Kommunikationsvorrichtung, aufweisend:
eine GPS-Signal-Zuführeinheit zur Zuführung eines GPS-Signals;
eine Einheit zur Detektierung eines momentanen Landes (5) zur Detektierung eines momentanen Landes, in dem sich das elektronische Gerät (1) derzeit befindet, auf Basis des GPS-Signals;
eine Einheit zum Abrufen von nutzbaren Frequenzbändern (7) zum Abrufen eines nutzbaren Frequenzbandes des momentanen Landes auf der Basis von Ländernamendaten von der Einheit zur Detektierung von momentanen Ländern (5) und Daten in einer Tabelle von Ländernamen und Betriebsfrequenzbändern (6); und
eine Betriebsfrequenz-Änderungseinheit (10) zur Änderung der Frequenz für die Kommunikation zwischen elektronischen Geräten auf der Basis von dem Abrufergebnis, das von der Einheit zum Abrufen von nutzbaren Frequenzbändern (7) erhalten wurde,
**dadurch gekennzeichnet, dass**: die Betriebsfrequenz-Änderungseinheit (10) über eine Kömmunikationseinheit (15) Daten über das nutzbare Frequenzband des momentanen Landes an eine Betriebsfrequenz-Änderungseinheit eines anderen elektronischen Gerätes (16) mit einer drahtlosen Kommunikationsvorrichtung überträgt, wobei die Betriebsfrequenz-Änderungseinheit (10) über eine Kommunikationseinheit (15) eine Anweisung zur Umstellung der Frequenz auf das nutzbare Frequenzband des momentanen Landes an eine Betriebsfrequenz-Änderungseinheit eines anderen elektronischen Gerätes (16) mit einer drahtlosen Kommunikationsvorrichtung ausgibt, wobei das andere elektronische Gerät (16) in einer Systemkomponenten-Registriereinheit (13) registriert ist, und wobei die Betriebsfrequenz-Änderungseinheit (10) über die Kommunikationseinheit (15) eine Anweisung zur Umstellung der Frequenz auf das nutzbare Frequenzband des momentanen Landes an das andere elektronische Gerät (16) mit der drahtlosen Kommunikationsvorrichtung ausgibt, wenn ermittelt wird, dass die Frequenz von Funkwellen, die von dem anderen elektronischen Gerät ausgegeben (16) werden, nicht mit dem nutzbaren Frequenzband des momentanen Landes übereinstimmt, wobei das andere elektronische Gerät (16) in der Systemkomponenten-Registriereinheit (13) registriert ist.

2. Ein elektronisches Gerät (1) wie in Anspruch 1 beansprucht, wobei das elektronische Gerät (1) mit der drahtlosen Kommunikationsvorrichtung eins der folgenden Geräte aufweist: einen Personal Digital Assistant, einen tragbaren PC, einen Notebook-PC und ein Navigationsgerät, von denen alle eine Kartenanzeige-Software enthalten.

3. Ein elektronisches Gerät (1) mit einer drahtlosen Kommunikationsvorrichtung nach Anspruch 1, wobei:
die Einheit zur Detektierung eines momentanen Landes (5) ermittelt, ob das elektronische Gerät (1) eine Grenze überschreitet; und
die Einheit zur Detektierung eines momentanen Landes (5) das betretene Land mittels des GPS-Signals detektiert, wenn eine Grenzüberschreitung des elektronischen Geräts (1) ermittelt wird.

4. Ein elektronisches Gerät (1) mit einer drahtlosen Kommunikationsvorrichtung nach Anspruch 1, wobei:
das andere elektronische Gerät (16) einen Speicher (20) zum Speichern einer Betriebsfrequenz aufweist; und
der Inhalt des Speichers (20) auf der Basis der an die Betriebsfrequenz-Änderungseinheit übertragenen Daten umgeschrieben wird.

5. Ein elektronisches Gerät (1) mit einer drahtlosen Kommunikationsvorrichtung (11) nach Anspruch 1, wobei das von der drahtlosen Kommunikationsvorrichtung (11) genutzte Frequenzband Bluetooth entspricht, das das 2,4 GHz-Band nutzt.

6. Ein elektronisches Gerät (1) mit einer drahtlosen Kommunikationsvorrichtung (11) nach Anspruch 1, wobei das nutzbare Frequenzband detektiert wird, wenn das elektronische Gerät (1) eingeschaltet ist oder verwendet wird.

7. Ein elektronisches Gerät (1) mit einer drahtlosen Kommunikationsvorrichtung (11) nach Anspruch 1, wobei die Tabelle der Ländernamen und Betriebsfrequenzbändern (6) über eine Kommunikationseinheit (15) extern umschreibbar ist.

## Revendications

1. Appareil électronique (1) équipé d'un dispositif de communication sans fil, comprenant :
un dispositif de communication sans fil comportant :
une unité d'entrée de signal GPS (4) destinée à faire entrer un signal GPS ;
une unité de détection du pays actuel (5) destinée à détecter le pays actuel dans lequel l'appareil électronique (1) se situe à présent sur la base du signal GPS ;
une unité de recherche de bande de fréquence utilisable (7) destinée à rechercher une bande de fréquence utilisable du pays actuel, sur la base des données de noms de pays provenant de l'unité de détection du pays actuel (5) et des données d'une table des noms de pays et des bandes de fréquences d'exploitation (6) ; et
une unité de changement de fréquence d'exploitation (10) destinée à changer la fréquence de communication entre appareils électroniques, sur la base du résultat de recherche obtenu par l'unité de recherche de bande de fréquence utilisable (7)
**caractérisé en ce que** : l'unité de changement de fréquence d'exploitation (10) transmet des données sur la bande de fréquence utilisable du pays actuel par l'intermédiaire d'une unité de communication (15) à une unité de changement de fréquence d'exploitation d'un autre appareil électronique (16) équipé d'un dispositif de communication sans fil, dans lequel l'unité de changement de fréquence d'exploitation (10) donne l'instruction à une unité de changement de fréquence d'exploitation d'un autre appareil électronique (16) équipé d'un dispositif de communication sans fil, par l'intermédiaire d'une unité de communication (15), de faire passer la fréquence à la bande de fréquence utilisable du pays actuel, l'autre appareil électronique (16) étant enregistré dans une unité d'enregistrement des composants du système (13), et dans lequel, lorsqu'il est établi que la fréquence des ondes radio émises par l'autre appareil électronique (16) ne correspond pas à la bande de fréquence utilisable du pays actuel, l'unité de changement de fréquence d'exploitation (10) donne l'instruction à l'autre appareil électronique (16) équipé du dispositif de communication sans fil, par l'intermédiaire de l'unité de communication (15), de faire passer la fréquence à la bande de fréquence utilisable du pays actuel, l'autre appareil électronique (16) étant enregistré dans l'unité d'enregistrement des composants du système (13).

2. Appareil électronique (1) selon la revendication 1, dans lequel l'appareil électronique (1) équipé du dispositif de communication sans fil (11) comprend l'un des équipements suivants : assistant numérique personnel, ordinateur personnel (PC) de poche, ordinateur bloc-notes, et appareil de navigation, chacun étant équipé d'un logiciel d'affichage de cartes.

3. Appareil électronique (1) équipé d'un dispositif de communication sans fil (11) selon la revendication 1, dans lequel :
l'unité de détection du pays actuel (5) détermine si l'appareil électronique (1) franchit une frontière ; et,
lorsque qu'il est établi que l'appareil électronique (1) franchit une frontière, l'unité de détection du pays actuel (5) détecte le pays dans lequel l'appareil vient d'entrer en utilisant le signal GPS.

4. Appareil électronique (1) équipé d'un dispositif de communication sans fil (11) selon la revendication 1, dans lequel :
l'autre appareil électronique (16) comprend une mémoire (20) destinée à stocker là fréquence d'exploitation ; et
le contenu de la mémoire (20) est réinscrit sur la base des données transmises à l'unité de changement de fréquence d'exploitation.

5. Appareil électronique (1) équipé d'un dispositif de communication sans fil (11) selon la revendication 1, dans lequel la bande de fréquence utilisée par le dispositif de communication sans fil (11) est conforme à la norme Bluetooth qui utilise la bande 2,4 GHz.

6. Appareil électronique (1) équipé d'un dispositif de communication sans fil (11) selon la revendication 1, dans lequel la bande de fréquence utilisable est détectée lorsque l'appareil électronique (1) est mis en marche ou est utilisé.

7. Appareil électronique (1) équipé d'un dispositif de communication sans fil (11) selon la revendication 1, dans lequel la table des noms de pays et de bandes de fréquences d'exploitation (6) est réinscriptible de manière externe par l'intermédiaire d'une unité de communication (15).
